(19) Europäisches Patentamt
European Patent Office
Office européen des brevets

(11) **EP 3 348 868 B1**

(12) **EUROPEAN PATENT SPECIFICATION**

(45) Date of publication and mention of the grant of the patent:
**10.03.2021 Bulletin 2021/10**

(51) Int Cl.:
***F16H 55/08*** *(2006.01)*      ***F16H 55/17*** *(2006.01)*

(21) Application number: **16843360.5**

(86) International application number:
**PCT/CN2016/072271**

(22) Date of filing: **27.01.2016**

(87) International publication number:
**WO 2017/041416 (16.03.2017 Gazette 2017/11)**

(54) **CONJUGATE CURVE-BASED BEVEL GEAR MESHING PAIR HAVING MULTIPLE CONTACT POINTS**

KONJUGATKURVENBASIERTES KEGELRADEINGRIFFPAAR MIT MEHREREN KONTAKTPUNKTEN

PAIRE D'ENGRÈNEMENT D'ENGRENAGES CONIQUES BASÉS SUR DES COURBES CONJUGUÉES, À POINTS DE CONTACT MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2015 CN 201510579951**

(43) Date of publication of application:
**18.07.2018 Bulletin 2018/29**

(73) Proprietor: **Chongqing University**
**Shapingba, Chongqing 400044 (CN)**

(72) Inventors:
• **CHEN, Bingkui**
  **Chongqing 400044 (CN)**
• **TAN, Rulong**
  **Chongqing 400044 (CN)**
• **LIANG, Dong**
  **Chongqing 400044 (CN)**
• **LI, Chaoyang**
  **Chongqing 400044 (CN)**

(74) Representative: **Schmitt-Nilson Schraud Waibel Wohlfrom**
**Patentanwälte Partnerschaft mbB**
**Pelkovenstraße 143**
**80992 München (DE)**

(56) References cited:
**CN-A- 103 075 493      CN-A- 103 939 575**
**CN-A- 103 939 575      CN-A- 104 595 422**
**US-A1- 2010 212 444**

• **CHEN, BINGKUI ET AL.: 'Tooth Profile Generation of Conjugate-curve Gears' CHINESE JOURNAL OF MECHANICAL ENGINEERING vol. 50, no. 3, 28 February 2014, XP009508899**

**Description**

TECHNICAL FIELD

The present invention relates to a technical field of gear transmission, and in particular, to a conjugate-curve-based multipoint contact bevel gear meshing pair.

BACKGROUND

As a typical mechanical element, a gear decides the performance of an equipment to a great extent. Therefore, a design with respect to a high performance gear transmission element also has a very important meaning and practical engineering value. With respect to conventional gear pairs such as cylindrical gear pairs, bevel gear pairs, worm and gear pairs, and hypoid gear pairs, their tooth faces are all conjugate surfaces, tooth profiles are all convex, and in a process of meshing, they are generally of line contact. Therefore, the bearing capacity of the tooth face is low, the sliding rate between tooth faces is large, and tooth face abrasion is severe.

Advancement of production and technology induces higher requirements for highspeed, heavy loads, and high-power gear transmission devices. Therefore, tremendous development has been made on circular tooth gears. The circular gear pair is of point contact. Its prominent characteristic is that the tooth profiles mesh under an approximate pure rolling contact condition between a convex circular arc profile and a concave circular arc profile. At present, two patents which have publication numbers CN 102853054 A and CN 103075493 A disclose a conjugate-curve-based gear. The gears in the above two patents are spherical tubular surfaces which are generated by the enveloping motions of a sphere whose center moves along a spatial curve, so the section curves of the tooth profiles of these gears are circular arcs. When such gears meshes, there is only one meshing point between a pair of contact tooth surfaces. Such gear meshing pair has a point contact characteristic when initially manufactured. If a better contact characteristic is needed such like larger contact pattern, these gears must be run-in. In order to increase the performance of running-in, tooth faces of such gears generally adopts soft tooth faces or medium-hard tooth faces. The running-in process will increase the manufacturing cost of the enterprise, and in a practical application, in comparison with the soft tooth face and the medium-hard tooth face, a hard tooth face has higher contact strength and bearing capacity. Therefore, at present, a conjugate-curve-based multipoint-contact bevel gear pair is needed. According to mechanical requirements, it has a multipoint contact characteristic when initially manufactured, so this gear may not need the running-in process and also can be designed as the hard tooth face. Therefore, it may be applied to an industry scenario of high strength requirements. Meanwhile, even use requirements can be met without running-in, which reduces the production manufacturing cost of the enterprise effectively.

CN 103 939 575 A discloses a point contactor gear, a meshing pair, and a machining tool based on conjugate curves including a convex gear and a concave gear which are in one-point or multi-point contact meshing, wherein the multiple meshing points are distributed on the same cross-section of tooth profiles.

CN 103 075 493 A discloses a bevel gear and its meshing pair based on conjugate curve in the case of a single contact point.

SUMMARY

The present invention relates to a conjugate-curve-based multipoint contact bevel gear meshing pair according to the appended claim.

In light of this, the object of the present invention is to overcome defects of the prior art, and provide a conjugate-curve-based multipoint contact bevel gear pair which may have a multipoint contact characteristic according to use requirements.

The present invention discloses a conjugate-curve-based multipoint contact bevel gear pair, it includes a convex tooth gear and a concave tooth gear which are of point contact, and there are multiple contact points, the tooth surface of the convex tooth gear and the concave tooth gear is a tubular surface.

Further, the number of the meshing points of the convex tooth gear and the concave tooth gear is 3, and the meshing points are distributed on different cross sections of tooth profiles thereof.

Further, three contact curves formed by the contact points on the tooth profile of the convex tooth gear or the concave tooth gear are a contact curve $l_1$, a contact curve $l_2$ and a contact curve $l_3$ respectively.

The curvilinear equation of the contact curve $l_1$ is:
$$\begin{cases} x_1 = r\cos\theta_1 \\ y_1 = r\sin\theta_1 \\ z_1 = p\theta_1 \end{cases}$$
wherein $r$ is a radius of the circular helix $l_1$, $\theta_1$ is a curve parameter of the circular helix $l_1$, its value range is $\theta_{1i} \le \theta_1 \le \theta_{1o}$, $p$ is a helix parameter of the circular helix.

The curvilinear equation of the contact curve $l_2$ is:
$$\begin{cases} x_2 = r\cos(\theta_1 - \Delta\theta_1) \\ y_2 = r\sin(\theta_1 - \Delta\theta_1) \\ z_2 = p\theta_1 \end{cases}$$
wherein r is a radius of the circular helix $l_1$, $\theta_1$ is a curve parameter of the circular helix $l_1$, its value range is $\theta_{1i} \le \theta_1 \le \theta_{1o}$, $p$ is a helix parameter of the circular helix.

The curvilinear equation of the contact curve $l_3$ is:
$$\begin{cases} x_3 = r\cos(\theta_1 - \Delta\theta_2) \\ y_3 = r\sin(\theta_1 - \Delta\theta_2) \\ z_3 = p\theta_1 \end{cases}$$
wherein r is a radius of the circular helix $l_1$, $\theta_1$ is a curve parameter of the circular helix $l_1$, its value range is $\theta_{1i} \le \theta_1 \le \theta_{1o}$, $p$ is a helix parameter of the circular helix.

Further, the tooth profile of the convex tooth gear includes a surface $\Sigma_1$, a surface $\Sigma_2$ and a surface $\Sigma_3$; the tooth profile of the concave tooth gear includes a surface $\Sigma_1'$, a surface $\Sigma_2'$ and a surface $\Sigma_3'$.

The equation of the surface $\Sigma_1$ is:
$$\begin{cases} x_{\Sigma 1} = r\cos\theta_1 + h_1 n_{x1} + h_1 \cos\varphi_1 \cos\alpha_1 \\ y_{\Sigma 1} = r\sin\theta_1 + h_1 n_{y1} + h_1 \cos\varphi_1 \sin\alpha_1 \\ z_{\Sigma 1} = p\theta_1 + h_1 n_{z1} + h_1 \sin\varphi_1 \\ \Phi(\theta_1,\varphi_1,\alpha_1) = (r_{\theta_1}, r_{\varphi_1}, r_{\alpha_1}) = 0 \end{cases}$$
in the equation,

$r_{\theta_1} = \{-r\sin\theta_1 + h_1 n_{x1}(\theta_1), r\cos\theta_1 + h_1 n_{y1}(\theta_1), p + h_1 n_{z1}(\theta_1)\}$

$r_{\varphi} = \{-h_1 \sin\varphi_1 \cos\alpha_1, -h_1 \sin\varphi_1 \sin\alpha_1, h_1 \cos\varphi_1\}$ wherein $h_1$ is a radius of the tooth profile, $n_{x1}$, $n_{y1}$

$r_{\alpha} = \{-h_1 \cos\varphi_1 \sin\alpha_1, h_1 \cos\varphi_1 \cos\alpha_1, 0\}$

and $n_{z1}$ denote components of the normal vector of the tooth profile at corresponding contact point position, parameters $\varphi_1$ and $\alpha_1$ denote general sphere $L_1$ parameters respectively.

The equation of $\Sigma_2$ is:
$$\begin{cases} x_{\Sigma 2} = r\cos\theta_2 + h_2 n_{x2} + h_2 \cos\varphi_2 \cos\alpha_2 \\ y_{\Sigma 2} = r\sin\theta_2 + h_2 n_{y2} + h_2 \cos\varphi_2 \sin\alpha_2 \\ z_{\Sigma 2} = p(\theta_2 + \Delta\theta_1) + h_2 n_{z2} + h_2 \sin\varphi_2 \\ \Phi(\theta_2,\varphi_2,\alpha_2) = (r_{\theta_2}, r_{\varphi_2}, r_{\alpha_2}) = 0 \\ \theta_2 = \theta_1 - \Delta\theta_1 \end{cases}$$
in the equation,

$r_{\theta_2} = \{-r\sin\theta_2 + h_2 n_{x2}(\theta_2), r\cos\theta_2 + h_2 n_{y2}(\theta_2), p + h_2 n_{z2}(\theta_2)\}$

$r_{\varphi_2} = \{-h_2 \sin\varphi_2 \cos\alpha_2, -h_2 \sin\varphi_2 \sin\alpha_2, h_2 \cos\varphi_2\}$ wherein $h_2$ is a radius of the tooth profile, $n_{x2}$,

$r_{\alpha_2} = \{-h_2 \cos\varphi_2 \sin\alpha_2, h_2 \cos\varphi_2 \cos\alpha_2, 0\}$

$n_{y2}$ and $n_{z2}$ denote components of the normal vector of the tooth profile at corresponding contact point position, parameters $\varphi_2$ and $\alpha_2$ denote general sphere $L_2$ parameters respectively.

The equation of $\Sigma_3$ is:

$$\begin{cases} x_{\Sigma 3} = r\cos\theta_3 + h_3 n_{x3} + h_3\cos\varphi_3\cos\alpha_3 \\ y_{\Sigma 3} = r\sin\theta_3 + h_3 n_{y3} + h_3\cos\varphi_3\sin\alpha_3 \\ z_{\Sigma 3} = p(\theta_3 + \Delta\theta_2) + h_3 n_{z3} + h_3\sin\varphi_3 \\ \Phi(\theta_3,\varphi_3,\alpha_3) = (r_{\theta_3}, r_{\varphi_3}, r_{\alpha_3}) = 0 \\ \theta_3 = \theta_1 - \Delta\theta_2 \end{cases}$$

in the equation,

$$r_{\theta_3} = \{-r\sin\theta_3 + h_3 n_{x3}(\theta_3), r\cos\theta_3 + h_3 n_{y3}(\theta_3), p + h_3 n_{z3}(\theta_3)\}$$

$$r_{\varphi_3} = \{-h_3\sin\varphi_3\cos\alpha_3, -h_3\sin\varphi_3\sin\alpha_3, h_3\cos\varphi_3\}$$

wherein $h_3$ is a radius of the tooth profile, $n_{x3}$,

$$r_{\alpha_3} = \{-h_3\cos\varphi_3\sin\alpha_3, h_3\cos\varphi_3\cos\alpha_3, 0\}$$

$n_{y3}$ and $n_{z3}$ denote components of the normal vector of the tooth profile at corresponding contact point position, parameters $\varphi_3$ and $\alpha_3$ denote general sphere $L_3$ parameters respectively.

The equation of $\Sigma_1'$ is:

$$\begin{cases} x_{\Sigma 1} = r\cos\theta_1 - h_1 n_{x1} + h_1\cos\varphi_1\cos\alpha_1 \\ y_{\Sigma 1} = r\sin\theta_1 - h_1 n_{y1} + h_1\cos\varphi_1\sin\alpha_1 \\ z_{\Sigma 1} = p\theta_1 - h_1 n_{z1} + h_1\sin\varphi_1 \\ \Phi(\theta_1,\varphi_1,\alpha_1) = (r_{\theta_1}, r_{\varphi_1}, r_{\alpha_1}) = 0 \end{cases}$$

in the equation, $r_\varphi = \{-h_1\sin\varphi_1\cos\alpha_1,$

$-h_1\sin\varphi_1\sin\alpha_1, h_1\cos\varphi_1\}$ $r_\alpha = \{-h_1\cos\varphi_1\sin\alpha_1, h_1\cos\varphi_1\cos\alpha_1, 0\}$
wherein $h_1$ is a radius of the tooth profile, $n_{x1}$, $n_{y1}$ and $n_{z1}$ denote components of the normal vector of the tooth profile at corresponding contact point position, parameters $\varphi_1$ and $\alpha_1$ denote general sphere $L_1$ parameters respectively.

The equation of $\Sigma_2'$ is:

$$\begin{cases} x_{\Sigma 2} = r\cos\theta_2 - h_2 n_{x2} + h_2\cos\varphi_2\cos\alpha_2 \\ y_{\Sigma 2} = r\sin\theta_2 - h_2 n_{y2} + h_2\cos\varphi_2\sin\alpha_2 \\ z_{\Sigma 2} = p(\theta_2 + \Delta\theta_1) - h_2 n_{z2} + h_2\sin\varphi_2 \\ \Phi(\theta_2,\varphi_2,\alpha_2) = (r_{\theta_2}, r_{\varphi_2}, r_{\alpha_2}) = 0 \\ \theta_2 = \theta_1 - \Delta\theta_1 \end{cases}$$

in the equation,

$$r_{\theta_2} = \{-r\sin\theta_2 - h_2 n_{x2}(\theta_2), r\cos\theta_2 - h_2 n_{y2}(\theta_2), p - h_2 n_{z2}(\theta_2)\}$$

$$r_{\varphi_2} = \{-h_2\sin\varphi_2\cos\alpha_2, -h_2\sin\varphi_2\sin\alpha_2, h_2\cos\varphi_2\}$$

wherein $h_2$ is a radius of the tooth profile, $n_{x2}$,

$$r_{\alpha_2} = \{-h_2\cos\varphi_2\sin\alpha_2, h_2\cos\varphi_2\cos\alpha_2, 0\}$$

$n_{y2}$ and $n_{z2}$ denote components of the normal vector of the tooth profile at corresponding contact point position, parameters $\varphi_2$ and $\alpha_2$ denote general sphere $L_2$ parameters respectively.

The equation of $\Sigma_3'$ is:

$$\begin{cases} x_{\Sigma 3} = r\cos\theta_3 - h_3 n_{x3} + h_3\cos\varphi_3\cos\alpha_3 \\ y_{\Sigma 3} = r\sin\theta_3 - h_3 n_{y3} + h_3\cos\varphi_3\sin\alpha_3 \\ z_{\Sigma 3} = p(\theta_3 + \Delta\theta_2) - h_3 n_{z3} + h_3\sin\varphi_3 \\ \Phi(\theta_3,\varphi_3,\alpha_3) = (r_{\theta_3}, r_{\varphi_3}, r_{\alpha_3}) = 0 \\ \theta_3 = \theta_1 - \Delta\theta_2 \end{cases}$$

in the equation,

$$r_{\theta_3} = \{-r\sin\theta_3 - h_3 n_{x3}(\theta_3), r\cos\theta_3 - h_3 n_{y3}(\theta_3), p - h_3 n_{z3}(\theta_3)\}$$

$$r_{\varphi_3} = \{-h_3\sin\varphi_3\cos\alpha_3, -h_3\sin\varphi_3\sin\alpha_3, h_3\cos\varphi_3\}$$

wherein $h_3$ is a radius of the tooth profile, $n_{x3}$,

$$r_{\alpha_3} = \{-h_3\cos\varphi_3\sin\alpha_3, h_3\cos\varphi_3\cos\alpha_3, 0\}$$

$n_{y3}$ and $n_{z3}$ denote components of the normal vector of the tooth profile at corresponding contact point position, parameters $\varphi_3$ and $\alpha_3$ denote general sphere $L_3$ parameters respectively.

Further, the number of the contact points of the convex tooth gear and the concave tooth gear is 4, and the contact points are a contact point $p_1$, a contact point $p_2$, a contact point $p_3$ and a contact point $p_4$ respectively; three contact curves formed by the contact points on the tooth profile of the convex tooth gear or the concave tooth gear are a contact curve $l_1$, a contact curve $l_2$ and a contact curve $l_3$ respectively; the meshing point $p_1$ is on the contact curve $l_1$, the meshing point $p_2$ as well as the meshing point $p_3$ are on the contact curve $l_2$, the contact point $p_4$ is on the contact curve $l_3$; the contact curve $l_2$ is a quadric parabolic curve, both the contact curve $l_1$ and the contact curve $l_3$ are circular arc curves and arranged at two sides of the contact curve $l_2$.

Further, the tooth profile of the convex tooth gear includes a surface $\Sigma_1$; the tooth profile curved surface of the concave tooth gear includes a surface $\Sigma_1'$, a surface $\Sigma_2'$ and a surface $\Sigma_3'$ which smoothly join with each other.

The equation of $\Sigma_1$ is:
$$\begin{cases} x_c = r_c\cos\theta_c + h_{1c}n_{x1c} + h_{1c}\cos\varphi_c\cos\alpha_c \\ y_c = r_c\sin\theta_c + h_{1c}n_{y1c} + h_{1c}\cos\varphi_c\sin\alpha_c \\ z_c = p_c\theta_c + h_{1c}n_{z1c} + h_{1c}\sin\varphi_c \\ \Phi(\theta_c, \varphi_c, \alpha_c) = (r_{\theta_c}, r_{\varphi_c}, r_{\alpha_c}) = 0 \end{cases}$$
in the equation,

$$r_{\theta_c} = \{-r_c\sin\theta_c + h_{1c}n_{x1c}(\theta_c), r_c\cos\theta_c + h_{1c}n_{y1c}(\theta_c), p_c + h_{1c}n_{z1c}(\theta_c)\}$$

$$r_{\varphi_c} = \{-h_{1c}\sin\varphi_c\cos\alpha_c, -h_{1c}\sin\varphi_c\sin\alpha_c, h_{1c}\cos\varphi_c\}$$

wherein $r_c$ denotes a radius of a cylinder

$$r_{\alpha_c} = \{-h_{1c}\cos\varphi_c\sin\alpha_c, h_{1c}\cos\varphi_c\cos\alpha_c, 0\}$$

where the circular helix is located, $\theta_c$ denotes a curve parameter of the circular helix, $p_c$ denotes a helix parameter; $h_{1c}$ denotes a radius of the meshing tubular, $n_{x1c}$, $n_{y1c}$ and $n_{z1c}$ denote components of the normal vector of the tooth profile at corresponding contact point positions, parameters $\varphi_c$ and $\alpha_c$ denote general sphere parameters respectively.

The equation of $\Sigma_1'$ is:
$$\begin{cases} x_{\Sigma1} = (\rho\sin\alpha + X)\cos\phi_1 - (-\rho\cos\alpha + L)\cos\beta\sin\phi_1 + r_1\cos\phi_1 \\ y_{\Sigma1} = (\rho\sin\alpha + X)\sin\phi_1 - \rho\cos\alpha + L\cos\beta\cos\phi_1 + r_1\sin\phi_1 \\ z_{\Sigma1} = r_1\phi_1\cot\beta + \rho\cos\alpha + L\sin\beta \end{cases}$$
in the equa-

tion, $\varphi_1$ is the gear rotation angle, $r_1$ is the radius of the pitch circle, $\beta$ is the helix angle of a gear. If the circle center of the tooth profile is located outside the pitch circle, X is positive, and otherwise, X is negative; if the circle center of the tooth profile is located at a different side along the tooth symmetry axis, $L$ is positive, and otherwise, $L$ is negative.

The equation of $\Sigma'_2$ is:

$$\begin{cases} x_{\Sigma 2} = \left( t\cos\alpha_n - \dfrac{t^2}{2A}\sin\alpha_n + (\dfrac{\rho\sin^2\alpha}{2\cos\alpha} + A)\sin\alpha_n \right)\cos\phi_1 \\ \qquad - \left( t\sin\alpha_n + \dfrac{t^2}{2A}\cos\alpha_n - (\dfrac{\rho\sin^2\alpha}{2\cos\alpha} + A)\cos\alpha_n \right)\cos\beta\sin\phi_1 + r_1\cos\phi_1 \\ y_{\Sigma 2} = \left( t\cos\alpha_n - \dfrac{t^2}{2A}\sin\alpha_n + (\dfrac{\rho\sin^2\alpha}{2\cos\alpha} + A)\sin\alpha_n \right)\sin\phi_1 \\ \qquad + \left( t\sin\alpha_n + \dfrac{t^2}{2A}\cos\alpha_n - (\dfrac{\rho\sin^2\alpha}{2\cos\alpha} + A)\cos\alpha_n \right)\cos\beta\cos\phi_1 + r_1\sin\phi_1 \\ z_{\Sigma 2} = r_1\phi_1\cot\beta - \left( t\sin\alpha_n + \dfrac{t^2}{2A}\cos\alpha_n - (\dfrac{\rho\sin^2\alpha}{2\cos\alpha} + A)\cos\alpha_n \right)\sin\beta \end{cases}$$

The equation of $\Sigma'_3$ is:

$$\begin{cases} x_{\Sigma 3} = \left( \rho'\sin\alpha' + X' \right)\cos\phi_1 - \left( -\rho'\cos\alpha' + L' \right)\cos\beta\sin\phi_1 + r_1\cos\phi_1 \\ y_{\Sigma 3} = \left( \rho'\sin\alpha' + X' \right)\sin\phi_1 - \rho'\cos\alpha' + L'\cos\beta\cos\phi_1 + r_1\sin\phi_1 \\ z_{\Sigma 3} = r_1\phi_1\cot\beta + \rho'\cos\alpha' + L'\sin\beta \end{cases}$$

in the equation, $\varphi_1$ is the gear rotation angle, $r_1$ is the radius of the pitch circle, $\beta$ is the helix angle of a gear. If the circle center of the tooth profile is located outside the pitch circle, $X'$ is positive, and otherwise, $X'$ is negative; if the circle center of the tooth profile is located at a different side along the tooth symmetry axis, $L'$ is positive, and otherwise, $L'$ is negative.

Further, the number of the contact points of the convex tooth gear and the concave tooth gear is 5, the contact points are a contact point $p_1$, a contact point $p_2$, a contact point $p_3$, a contact point $p_4$, and a contact point $p_5$ respectively; three contact curves formed by the contact points on the tooth profile of the convex tooth gear or the concave tooth gear are a contact curve $l_1$, a contact curve $l_2$ and a contact curve $l_3$ respectively; the contact point $p_1$ as well as the contact point $p_2$ are on the contact curve $l_1$, the meshing point $p_3$ is on the contact curve $l_2$, the contact point $p_4$ as well as the contact point $p_5$ are on the contact curve $l_3$; the contact curve $l_2$ is a circular arc curve, both the contact curve $l_1$ and the contact curve $l_3$ are quadric parabolic curves and arranged at the two sides of $l_2$.

Further, the tooth profile of the convex tooth gear includes a surface $\Sigma_1$; the tooth profile of the concave tooth gear includes a surface $\Sigma'_1$, a surface $\Sigma'_2$ and a surface $\Sigma'_3$ which smoothly join with each other.

The equation of $\Sigma_1$ is:

$$\begin{cases} x_m = r_m\cos\theta_m + h_{1m}n_{x1m} + h_{1m}\cos\varphi_m\cos\alpha_m \\ y_m = r_m\sin\theta_m + h_{1m}n_{y1m} + h_{1m}\cos\varphi_m\sin\alpha_m \\ z_m = p_m\theta_m + h_{1m}n_{z1m} + h_{1m}\sin\varphi_m \\ \Phi(\theta_m,\varphi_m,\alpha_m) = (\boldsymbol{r}_{\theta_m},\boldsymbol{r}_{\varphi_m},\boldsymbol{r}_{\alpha_m}) = 0 \end{cases}$$

in the equation,

$$\boldsymbol{r}_{\theta_m} = \{-r_m\sin\theta_m + h_{1m}n_{x1m}(\theta_m), r_m\cos\theta_m + h_{1m}n_{y1m}(\theta_m), p_m + h_{1m}n_{z1m}(\theta_m)\}$$

$$\boldsymbol{r}_{\varphi_m} = \{-h_{1m}\sin\varphi_m\cos\alpha_m, -h_{1m}\sin\varphi_m\sin\alpha_m, h_{1m}\cos\varphi_m\}$$

wherein $r_m$ denotes a radius of a cylinder where

$$\boldsymbol{r}_{\alpha_m} = \{-h_{1m}\cos\varphi_m\sin\alpha_m, h_{1m}\cos\varphi_m\cos\alpha_m, 0\}$$

the circular helix is located, $\theta_m$ denotes a curve parameter of the circular helix, $p_m$ denotes a helix parameter; $h_{1m}$ denotes a radius of the meshing tubular, $n_{x1m}$, $n_{y1m}$ and $n_{z1m}$ denote components of the normal vector of the tooth profile at corresponding contact point positions, parameters $\varphi_m$ and $\alpha_m$ denote general sphere parameters respectively.

The equation of $\Sigma_1'$ is:

$$
\begin{cases}
x_{\Sigma 1} = \left( t\cos\alpha_n - \dfrac{t^2}{2A}\sin\alpha_n + (\dfrac{\rho\sin^2\alpha}{2\cos\alpha} + A)\sin\alpha_n \right)\cos\phi_1 \\
\qquad - \left( t\sin\alpha_n + \dfrac{t^2}{2A}\cos\alpha_n - (\dfrac{\rho\sin^2\alpha}{2\cos\alpha} + A)\cos\alpha_n \right)\cos\beta\sin\phi_1 + r_1\cos\phi_1 \\
y_{\Sigma 1} = \left( t\cos\alpha_n - \dfrac{t^2}{2A}\sin\alpha_n + (\dfrac{\rho\sin^2\alpha}{2\cos\alpha} + A)\sin\alpha_n \right)\sin\phi_1 \\
\qquad + \left( t\sin\alpha_n + \dfrac{t^2}{2A}\cos\alpha_n - (\dfrac{\rho\sin^2\alpha}{2\cos\alpha} + A)\cos\alpha_n \right)\cos\beta\cos\phi_1 + r_1\sin\phi_1 \\
z_{\Sigma 1} = r_1\phi_1\cot\beta - \left( t\sin\alpha_n + \dfrac{t^2}{2A}\cos\alpha_n - (\dfrac{\rho\sin^2\alpha}{2\cos\alpha} + A)\cos\alpha_n \right)\sin\beta
\end{cases}
$$

The equation of $\Sigma_2'$ is:

$$
\begin{cases}
x_{\Sigma 2} = \left(\rho\sin\alpha + X\right)\cos\phi_1 - \left(-\rho\cos\alpha + L\right)\cos\beta\sin\phi_1 + r_1\cos\phi_1 \\
y_{\Sigma 2} = \left(\rho\sin\alpha + X\right)\sin\phi_1 - \rho\cos\alpha + L\cos\beta\cos\phi_1 + r_1\sin\phi_1 \\
z_{\Sigma 2} = r_1\phi_1\cot\beta + \rho\cos\alpha + L\sin\beta
\end{cases}
$$

in the equation,

$\varphi_1$ is the gear rotation angle, $r_1$ is the radius of the pitch circle, $\beta$ is the helix angle of a gear. If the circle center of the tooth profile is located outside the pitch circle, $X$ is positive, and otherwise, $X$ is negative; if the circle center of the tooth profile is located at a different side along the tooth symmetry axis, $L$ is positive, and otherwise, $L$ is negative.

The equation of $\Sigma_3'$ is:

$$
\begin{cases}
x_{\Sigma 3} = \left( t'\cos\alpha_n - \dfrac{t'^2}{2A'}\sin\alpha_n + (\dfrac{\rho\sin^2\alpha}{2\cos\alpha} + A')\sin\alpha_n \right)\cos\phi_1 \\
\qquad - \left( t'\sin\alpha_n + \dfrac{t'^2}{2A'}\cos\alpha_n - (\dfrac{\rho\sin^2\alpha}{2\cos\alpha} + A')\cos\alpha_n \right)\cos\beta\sin\phi_1 + r_1\cos\phi_1 \\
y_{\Sigma 3} = \left( t'\cos\alpha_n - \dfrac{t'^2}{2A'}\sin\alpha_n + (\dfrac{\rho\sin^2\alpha}{2\cos\alpha} + A')\sin\alpha_n \right)\sin\phi_1 \\
\qquad + \left( t'\sin\alpha_n + \dfrac{t'^2}{2A'}\cos\alpha_n - (\dfrac{\rho\sin^2\alpha}{2\cos\alpha} + A')\cos\alpha_n \right)\cos\beta\cos\phi_1 + r_1\sin\phi_1 \\
z_{\Sigma 3} = r_1\phi_1\cot\beta - \left( t'\sin\alpha_n + \dfrac{t'^2}{2A'}\cos\alpha_n - (\dfrac{\rho\sin^2\alpha}{2\cos\alpha} + A')\cos\alpha_n \right)\sin\beta
\end{cases}
$$

The advantageous effects of the present invention are: the meshing manner of the conjugate-curve-based multipoint-contact bevel gear pair is that the convex tooth gear and the concave tooth gear are simultaneously in multipoint contact and all the contact paths on respective tooth surfaces are smooth space curve. Such transmission inherits the meshing characteristics of conjugate curves, and the tooth profile of multipoint contact has high contact strength, large bearing capacity, a high transmission efficiency, a low lubricating oil temperature rise, a greatly decreased sliding rate, a small abrasion. Meanwhile, according to different requirements, different contact curves may be applied to achieve one-point, two-point or multipoint contact when gears mesh. These gears contribute to solves limitation where existing point contact gears, whose tooth surfaces are spherical tubular surfaces which are generated by the enveloping motions of a sphere whose center moves along a spatial curve, and have only one-point contact when they mesh. Therefore, the conjugate-curve-based multipoint-contact gear transmission is a kind of high performance gear transmission which has a broad prospect of application.

DRAWINGS

Hereinafter, the present invention is further described in conjunction with drawings and embodiments:

Figure 1 is a diagram of a tooth surface structure of a bevel gear which has three-point contact of the present invention;

Figure 2 is a diagram of meshing of a bevel gear which has three-point contact of the present invention;

Figure 3 is a diagram of derivation of a tooth profile of a bevel gear which has three-point contact of the present invention;

Figure 4 is a diagram of a tooth surface structure of a bevel gear which has four-point contact of the present invention;

Figure 5 is a diagram of meshing of a bevel gear which has four-point contact of the present invention;

Figure 6 is a diagram of derivation of a tooth profile of a bevel gear which has four-point contact of the present invention;

Figure 7 is a diagram of a tooth surface structure of a bevel gear which has five-point contact of the present invention;

Figure 8 is a diagram of meshing of a bevel gear which has five-point contact of the present invention;

Figure 9 is a diagram of derivation of a tooth profile of a bevel gear which has five-point contact of the present invention.

DETAILED DESCRIPTION

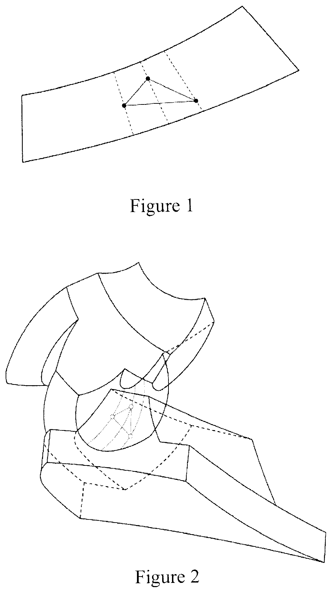

In an embodiment as shown in Figures 1, 2 and 3, three-segment tooth profile curves which are circular arc curves are selected in different cross sections of a tooth, and an optimum pressure angle is determined to achieve a general distribution of three-point contact at different cross sections. As shown in Figures 1 and 2, a convex meshing tubular tooth surface and a concave meshing tubular tooth surface are constructed based on a conjugate curve meshing theory to form a pairing meshing pair. The meshing pair moves along a contact point trace in an axial direction, both of them are generally of three-point contact in different cross sections of the tooth surface.

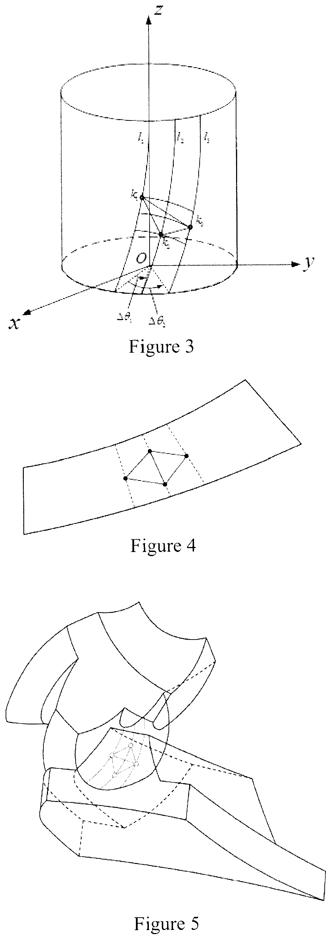

A circular helix is selected as a tooth surface conjugate contact curve. As shown in Figure 3, in a space coordinate system, $l_1$, $l_2$ and $l_3$ are three helical curves on a cylinder, the curve $l_2$ rotating around a center axis relative to the curve $l_1$ by an angle $\Delta\theta_1$, the curve $l_3$ rotating around the center axis relative to the curve $l_1$ by an angle $\Delta\theta_2$.

Assuming that the curvilinear equation of $l_1$ is $\begin{cases} x_1 = r\cos\theta_1 \\ y_1 = r\sin\theta_1 \\ z_1 = p\theta_1 \end{cases}$ wherein r denotes a radius of the circular

helix $l_1$, $\theta_1$ denotes a curve parameter of the circular helix $l_1$, its value range is $\theta_{1i} \le \theta_1 \le 0_{1o}$, $p$ denotes a helix parameter of the circular helix.

The curve $l_2$ rotates around the center axis relative to the curve $l_1$ by the angle $\Delta\theta_1$, and based on a coordinate transformation matrix, the curvilinear equation of the circular helix $l_2$ is obtained as $\begin{cases} x_2 = r\cos(\theta_1 - \Delta\theta_1) \\ y_2 = r\sin(\theta_1 - \Delta\theta_1) \\ z_2 = p\theta_1 \end{cases}$

Likewise, the curve $l_3$ rotates around the center axis relative to the curve $l_1$ by the angle $\Delta\theta_2$, and based on a coordinate transformation matrix, the curvilinear equation of the circular helix $l_3$ is obtained as $\begin{cases} x_3 = r\cos(\theta_1 - \Delta\theta_2) \\ y_3 = r\sin(\theta_1 - \Delta\theta_2) \\ z_3 = p\theta_1 \end{cases}$

Motion traces of the three contact points on the tooth surface are circular helixes $l_1$, $l_2$ and $l_3$. Especially, it should be noted that the three contact points don't locate in the same cross section, namely they present a different cross section distribution. The tooth surface is mainly constructed by three surfaces.

(1) The expression of the circular helix $l_1$ is known, and based on the tooth surface construction theory and method of meshing tubular, an equation of a surface $\Sigma_1$ formed from $l_1$ may be obtained as

$$\begin{cases} x_{\Sigma 1} = r\cos\theta_1 \pm h_1 n_{x1} + h_1\cos\varphi_1\cos\alpha_1 \\ y_{\Sigma 1} = r\sin\theta_1 \pm h_1 n_{y1} + h_1\cos\varphi_1\sin\alpha_1 \\ z_{\Sigma 1} = p\theta_1 \pm h_1 n_{z1} + h_1\sin\varphi_1 \\ \Phi(\theta_1,\varphi_1,\alpha_1) = (r_{\theta_1}, r_{\varphi_1}, r_{\alpha_1}) = 0 \end{cases}$$
in the equation,

$$r_{\theta_1} = \{-r\sin\theta_1 \pm h_1 n_{x1}(\theta_1), r\cos\theta_1 \pm h_1 n_{y1}(\theta_1), p \pm h_1 n_{z1}(\theta_1)\}$$

$$r_{\varphi} = \{-h_1\sin\varphi_1\cos\alpha_1, -h_1\sin\varphi_1\sin\alpha_1, h_1\cos\varphi_1\}$$
wherein the symbol "±" denotes that a convex

$$r_{\alpha} = \{-h_1\cos\varphi_1\sin\alpha_1, h_1\cos\varphi_1\cos\alpha_1, 0\}$$

tubular meshing tooth surface or a concave tubular meshing tooth surface may be formed respectively, $h_1$ denotes a radius of the meshing tubular, $n_{x1}$, $n_{y1}$ and $n_{z1}$ denote components of the normal vector of the tooth profile at corresponding contact point positions, parameters $\varphi_1$ and $\alpha_1$ denote general sphere $L_1$ parameters respectively.

(2) The expression of the circular helix $l_2$ is known, and based on the tooth surface construction theory and method of meshing tubular, an equation of a surface $\Sigma_2$ formed from $l_2$ may be obtained as

$$\begin{cases} x_{\Sigma 2} = r\cos\theta_2 \pm h_2 n_{x2} + h_2\cos\varphi_2\cos\alpha_2 \\ y_{\Sigma 2} = r\sin\theta_2 \pm h_2 n_{y2} + h_2\cos\varphi_2\sin\alpha_2 \\ z_{\Sigma 2} = p(\theta_2 + \Delta\theta_1) \pm h_2 n_{z2} + h_2\sin\varphi_2 \\ \Phi(\theta_2,\varphi_2,\alpha_2) = (r_{\theta_2}, r_{\varphi_2}, r_{\alpha_2}) = 0 \\ \theta_2 = \theta_1 - \Delta\theta_1 \end{cases}$$
in the equation,

$$r_{\theta_2} = \{-r\sin\theta_2 \pm h_2 n_{x2}(\theta_2), r\cos\theta_2 \pm h_2 n_{y2}(\theta_2), p \pm h_2 n_{z2}(\theta_2)\}$$

$$r_{\varphi_2} = \{-h_2\sin\varphi_2\cos\alpha_2, -h_2\sin\varphi_2\sin\alpha_2, h_2\cos\varphi_2\}$$
wherein the symbol "±" denotes that a con-

$$r_{\alpha_2} = \{-h_2\cos\varphi_2\sin\alpha_2, h_2\cos\varphi_2\cos\alpha_2, 0\}$$

vex tubular meshing tooth surface or a concave tubular meshing tooth surface may be formed respectively, $h_2$ denotes a radius of the meshing tubular, $n_{x2}$, $n_{y2}$ and $n_{z2}$ denote components of the normal vector of the tooth profile at corresponding contact point positions, parameters $\varphi_2$ and $\alpha_2$ denote general sphere $L_2$ parameters respectively.

(3) The expression of the circular helix $l_3$ is known, and based on the tooth surface construction theory and method of meshing tubular, an equation of a surface $\Sigma_3$ formed by from $l_3$ may be obtained as

$$\begin{cases} x_{\Sigma 3} = r\cos\theta_3 \pm h_3 n_{x3} + h_3\cos\varphi_3\cos\alpha_3 \\ y_{\Sigma 3} = r\sin\theta_3 \pm h_3 n_{y3} + h_3\cos\varphi_3\sin\alpha_3 \\ z_{\Sigma 3} = p(\theta_3 + \Delta\theta_2) \pm h_3 n_{z3} + h_3\sin\varphi_3 \\ \Phi(\theta_3,\varphi_3,\alpha_3) = (r_{\theta_3}, r_{\varphi_3}, r_{\alpha_3}) = 0 \\ \theta_3 = \theta_1 - \Delta\theta_2 \end{cases}$$
in the equation,

$$r_{\theta_3} = \{-r\sin\theta_3 \pm h_3 n_{x3}(\theta_3), r\cos\theta_3 \pm h_3 n_{y3}(\theta_3), p \pm h_3 n_{z3}(\theta_3)\}$$

$$r_{\varphi_3} = \{-h_3\sin\varphi_3\cos\alpha_3, -h_3\sin\varphi_3\sin\alpha_3, h_3\cos\varphi_3\}$$
wherein the symbol "±" denotes that a

$$r_{\alpha_3} = \{-h_3\cos\varphi_3\sin\alpha_3, h_3\cos\varphi_3\cos\alpha_3, 0\}$$

convex tubular meshing tooth surface or a concave tubular meshing tooth surface may be formed respectively, $h_3$ denotes a radius of the meshing tubular, $n_{x3}$, $n_{y3}$ and $n_{z3}$ denote components of the normal vector of the tooth profile at corresponding contact point positions, parameters $\varphi_3$ and $\alpha_3$ denote general sphere $L_3$ parameters respectively.

In another embodiment as shown Figures 4, 5 and 6, three-segment tooth profile curves which are circular arc curves are selected in different cross sections of a tooth, the first and the last segments of tooth profile curves are arc curves, the middle tooth profile curve is a quadric parabolic curve, an optimum point contact pressure angle is determined to achieve local four-point symmetrical contact. As shown in Figure 5, a convex meshing tubular tooth surface and a concave meshing tubular tooth surface are constructed based on a conjugate curve meshing theory to form a pairing meshing pair. the meshing pair moves along a contact point trace in an axial direction, both of them take on local four-point symmetrical contact in different cross sections of the tooth surface.

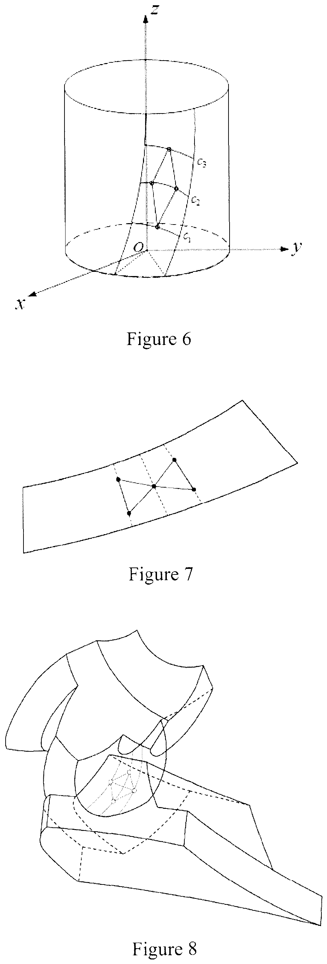

As shown in Figure 6, three-segment curves are selected on the tooth surface of the gear, wherein the first and the last segments of tooth profile curves are circular arc curves, the middle tooth profile curve is a quadric parabolic curve. In a process of meshing, the circular arc profile has single point contact within respective cross section region, the parabolic profile has two point contact within its cross section region, the meshing pair constitutes a four-point contact state.

(1) Convex tooth surface

The convex tooth surface adopts a circular arc profile, the general equation of its tooth surface can refer to the meshing tubular formation method, and it is further expressed as

$$\begin{cases} x_c = r_c \cos\theta_c + h_{1c} n_{x1c} + h_{1c} \cos\varphi_c \cos\alpha_c \\ y_c = r_c \sin\theta_c + h_{1c} n_{y1c} + h_{1c} \cos\varphi_c \sin\alpha_c \\ z_c = p_c\theta_c + h_{1c} n_{z1c} + h_{1c} \sin\varphi_c \\ \Phi(\theta_c,\varphi_c,\alpha_c) = (r_{\theta_c}, r_{\varphi_c}, r_{\alpha_c}) = 0 \end{cases}$$

in the equation,

$$r_{\theta_c} = \{-r_c \sin\theta_c + h_{1c} n_{x1c}(\theta_c), r_c \cos\theta_c + h_{1c} n_{y1c}(\theta_c), p_c + h_{1c} n_{z1c}(\theta_c)\}$$

$$r_{\varphi_c} = \{-h_{1c} \sin\varphi_c \cos\alpha_c, -h_{1c} \sin\varphi_c \sin\alpha_c, h_{1c} \cos\varphi_c\}$$

$$r_{\alpha_c} = \{-h_{1c} \cos\varphi_c \sin\alpha_c, h_{1c} \cos\varphi_c \cos\alpha_c, 0\}$$

wherein $r_c$ denotes a radius of a cylinder where the circular helix is located, $\theta_c$ denotes a curve parameter of the circular helix, $p_c$ denotes a helix parameter; $h_{1c}$ denotes a radius of the meshing tubular, $n_{x1c}$, $n_{y1c}$ and $n_{z1c}$ denote components of the normal vector of the tooth profile at corresponding contact point positions parameters, $\varphi_c$ and $\alpha_c$ denote general sphere parameters respectively.

(2) Concave tooth face

A concave tooth face is formed by three parts which include an arc profile $c_1$, a parabolic profile $c_2$ and an arc profile $c_3$.

1) The tooth surface equation of the arc profile $c_1$

Assuming that the circular arc profile $c_1$ is expressed as

$$\begin{cases} x_{c1} = \rho\cos\alpha + X \\ y_{c1} = \rho\sin\alpha + L \\ z_{c1} = 0 \end{cases}$$

wherein $\rho$ denotes a radius of the circular arc profile; $\alpha$ denotes a tooth pressure angle, which decides the position of the contact point on the arc; $X, L$ denote the distances between the center of the circular arc and the $y$, $x$ axes respectively.

The gear meshing theory kinematics method is adopted to derive the tooth surface equation, the equation of the tooth surface $\Sigma_1$ which is formed by the normal arc profile $c_1$ and its helical motion is

$$\begin{cases} x_{\Sigma 1} = (\rho\sin\alpha + X)\cos\phi_1 - (-\rho\cos\alpha + L)\cos\beta\sin\phi_1 + r_1\cos\phi_1 \\ y_{\Sigma 1} = (\rho\sin\alpha + X)\sin\phi_1 - \rho\cos\alpha + L\cos\beta\cos\phi_1 + r_1\sin\phi_1 \\ z_{\Sigma 1} = r_1\phi_1\cot\beta + \rho\cos\alpha + L\sin\beta \end{cases}$$

in the equation, $\varphi_1$ is a gear rotation angle, $r_1$ is a radius of a gear pitch circle, $\beta$ is the helix angle of a gear. If the circle center of the tooth profile is located outside the pitch circle, $X$ is positive, and otherwise, $X$ is negative; if the circle center of the tooth profile is located at a different side along the tooth symmetry axis, $L$ is positive, and otherwise, $L$ is negative;

2) The tooth surface equation of the quadratic parabolic profile $c_2$

Assuming that the quadratic parabolic profile $c_2$ is expressed as $\begin{cases} x_{c2} = t \\ y_{c2} = \dfrac{t^2}{2A} \\ z_{c2} = 0 \end{cases}$ in the equation, $t$ is an independent variable parameter; $A$ is a parabolic parameter, and $A = \rho\cos\alpha$.

Likewise, the equation of the tooth surface $\Sigma_2$ which is formed by the quadratic parabolic profile and its helical motion is

$$
\begin{cases}
\begin{aligned}
x_{\Sigma 2} &= \left( t\cos\alpha_n - \frac{t^2}{2A}\sin\alpha_n + (\frac{\rho\sin^2\alpha}{2\cos\alpha} + A)\sin\alpha_n \right)\cos\phi_1 \\
&\quad - \left( t\sin\alpha_n + \frac{t^2}{2A}\cos\alpha_n - (\frac{\rho\sin^2\alpha}{2\cos\alpha} + A)\cos\alpha_n \right)\cos\beta\sin\phi_1 + r_1\cos\phi_1 \\
y_{\Sigma 2} &= \left( t\cos\alpha_n - \frac{t^2}{2A}\sin\alpha_n + (\frac{\rho\sin^2\alpha}{2\cos\alpha} + A)\sin\alpha_n \right)\sin\phi_1 \\
&\quad + \left( t\sin\alpha_n + \frac{t^2}{2A}\cos\alpha_n - (\frac{\rho\sin^2\alpha}{2\cos\alpha} + A)\cos\alpha_n \right)\cos\beta\cos\phi_1 + r_1\sin\phi_1 \\
z_{\Sigma 2} &= r_1\phi_1\cot\beta - \left( t\sin\alpha_n + \frac{t^2}{2A}\cos\alpha_n - (\frac{\rho\sin^2\alpha}{2\cos\alpha} + A)\cos\alpha_n \right)\sin\beta
\end{aligned}
\end{cases}
$$

3) The tooth surface equation of the arc profile $c_3$

The derivation method of the tooth surface equation of the arc profile $c_3$ segment is the same as that of the arc profile $c_1$, assuming that the arc profile $c_3$ is expressed as

$$
\begin{cases}
x_{c3} = \rho'\cos\alpha' + X' \\
y_{c3} = \rho'\sin\alpha' + L' \\
z_{c3} = 0
\end{cases}
$$

wherein $\rho'$ denotes a radius of the arc profile; $\alpha'$ denotes a tooth pressure angle, which decides the position of the contact point in the arc; $X'$, $L'$ denote the distances between the center of the circular arc and the $y$, $x$ axes respectively.

The gear meshing theory kinematics method is adopted to derive the tooth surface equation, the equation of the tooth surface $\Sigma_3$ which is formed by the normal arc profile $c_3$ and its helical motion is

$$
\begin{cases}
x_{\Sigma 3} = \left( \rho'\sin\alpha' + X' \right)\cos\phi_1 - \left( -\rho'\cos\alpha' + L' \right)\cos\beta\sin\phi_1 + r_1\cos\phi_1 \\
y_{\Sigma 3} = \left( \rho'\sin\alpha' + X' \right)\sin\phi_1 - \rho'\cos\alpha' + L'\cos\beta\cos\phi_1 + r_1\sin\phi_1 \\
z_{\Sigma 3} = r_1\phi_1\cot\beta + \rho'\cos\alpha' + L'\sin\beta
\end{cases}
$$

in the equation, $\varphi_1$ is a gear rotation angle, $r_1$ is a radius of a gear pitch circle, $\beta$ is the helix angle of a gear. If the circle center of the tooth profile is located outside the pitch circle, $X'$ is positive, and otherwise, $X'$ is negative; if the circle center of the tooth profile is located at a different side along the tooth symmetry axis, $L'$ is positive, and otherwise, $L'$ is negative.

Based on the above, when the two segments of arc profiles and the middle quadratic parabolic profile are distributed closely, it is possible to achieve local four-point symmetrical contact; when the two segments of arc profiles and the middle quadratic parabolic profile are distributed in the full tooth width direction, it is possible to achieve four-point symmetrical contact in the tooth width direction.

In an embodiment as shown Figures 7, 8 and 9, different segments of tooth profile curves are selected in different cross sections in the tooth width direction of the tooth surface, the first and the last segments of tooth profile curves are quadric parabolic curves, the middle tooth profile curve is a arc curve, an optimum pressure angle is determined to achieve symmetrical five-point contact in the tooth width direction. As shown in Figure 8, a convex tubular meshing tooth surface and a concave tubular meshing tooth surface are constructed based on a conjugate curve meshing theory to form a pairing meshing pair. The meshing pair moves along a contact point trace in an axial direction, both of them are generally of five-point symmetrical contact in the tooth width direction.

Tooth surface equation

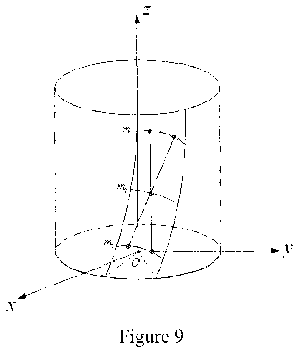

As shown in Figure 9, three-segment curves are selected on the tooth surface, wherein the first and the last segments of tooth profile curves are quadric parabolic curves, the middle tooth profile curve is an arc curve. In a process of meshing, the arc profile has single point contact within respective cross section region and the parabolic profile has two point contact within its cross section region, so the meshing pair constitutes a five-point contact state.

(1) Convex tooth surface

The convex tooth face still adopts a circular arc profile, the equation of its tooth surface refers to the meshing tubular formation method, and it is expressed as

$$\begin{cases} x_m = r_m \cos\theta_m + h_{1m}n_{x1m} + h_{1m}\cos\varphi_m\cos\alpha_m \\ y_m = r_m \sin\theta_m + h_{1m}n_{y1m} + h_{1m}\cos\varphi_m\sin\alpha_m \\ z_m = p_m\theta_m + h_{1m}n_{z1m} + h_{1m}\sin\varphi_m \\ \Phi(\theta_m,\varphi_m,\alpha_m) = (r_{\theta_m},r_{\varphi_m},r_{\alpha_m}) = 0 \end{cases}$$

$$r_{\theta_m} = \{-r_m\sin\theta_m + h_{1m}n_{x1m}(\theta_m), r_m\cos\theta_m + h_{1m}n_{y1m}(\theta_m), p_m + h_{1m}n_{z1m}(\theta_m)\}$$

in the equation,  $r_{\varphi_m} = \{-h_{1m}\sin\varphi_m\cos\alpha_m, -h_{1m}\sin\varphi_m\sin\alpha_m, h_{1m}\cos\varphi_m\}$  wherein $r_m$ denotes a

$$r_{\alpha_m} = \{-h_{1m}\cos\varphi_m\sin\alpha_m, h_{1m}\cos\varphi_m\cos\alpha_m, 0\}$$

radius of a cylinder where the circular helix is located, $\theta_m$ denotes a curve parameter of the circular helix, $p_m$ denotes a helix parameter; $h_{1m}$ denotes a radius of the meshing tubular, $n_{x1m}$, $n_{y1m}$ and $n_{z1m}$ denote the normal vector of the tooth profile at corresponding contact point positions, parameters $\varphi_m$ and $\alpha_m$ denote general sphere parameters respectively.

(2) Concave tooth surface

A concave tooth face is formed by three parts which include a quadratic parabolic profile $m_1$, an arc profile $m_2$ and a quadratic parabolic profile $m_3$.

1) The tooth surface equation of the quadratic parabolic profile $m_1$

Assuming that the quadratic parabolic profile $m_1$ is expressed as $\begin{cases} x_{m1} = t \\ y_{m1} = \dfrac{t^2}{2A} \\ z_{m1} = 0 \end{cases}$ in the equation, $t$ is an independent variable parameter; $A$ is a parabolic parameter, and $A = \rho\cos\alpha$.

Likewise, the equation of the tooth surface $\Sigma_1$ which is formed by the quadratic parabolic profile and its helical motion is:

$$\begin{cases} x_{\Sigma 1} = \left( t\cos\alpha_n - \dfrac{t^2}{2A}\sin\alpha_n + (\dfrac{\rho\sin^2\alpha}{2\cos\alpha} + A)\sin\alpha_n \right)\cos\phi_1 \\ \qquad - \left( t\sin\alpha_n + \dfrac{t^2}{2A}\cos\alpha_n - (\dfrac{\rho\sin^2\alpha}{2\cos\alpha} + A)\cos\alpha_n \right)\cos\beta\sin\phi_1 + r_1\cos\phi_1 \\ y_{\Sigma 1} = \left( t\cos\alpha_n - \dfrac{t^2}{2A}\sin\alpha_n + (\dfrac{\rho\sin^2\alpha}{2\cos\alpha} + A)\sin\alpha_n \right)\sin\phi_1 \\ \qquad + \left( t\sin\alpha_n + \dfrac{t^2}{2A}\cos\alpha_n - (\dfrac{\rho\sin^2\alpha}{2\cos\alpha} + A)\cos\alpha_n \right)\cos\beta\cos\phi_1 + r_1\sin\phi_1 \\ z_{\Sigma 1} = r_1\phi_1\cot\beta - \left( t\sin\alpha_n + \dfrac{t^2}{2A}\cos\alpha_n - (\dfrac{\rho\sin^2\alpha}{2\cos\alpha} + A)\cos\alpha_n \right)\sin\beta \end{cases}$$

2) The tooth surface equation of the arc profile $m_2$

Assuming that the arc profile $m_2$ is expressed as $\begin{cases} x_{m2} = \rho\cos\alpha + X \\ y_{m2} = \rho\sin\alpha + L \\ z_{m2} = 0 \end{cases}$ wherein $\rho$ denotes a radius of the

circular arc profile; $\alpha$ denotes a tooth pressure angle, which decides the position of the contact point on the arc; $X, L$ denote the distances between the center of the circular arc and the $y, x$ axes respectively.

The gear meshing theory kinematics method is adopted to derive the tooth surface equation, the equation of the tooth surface The gear meshing theory kinematics method is adopted to derive the tooth surface equation, the equation of the tooth surface $\Sigma_2$ which is formed by the normal arc profile $m_2$ and its helical motion is

$$\begin{cases} x_{\Sigma 2} = (\rho\sin\alpha + X)\cos\phi_1 - (-\rho\cos\alpha + L)\cos\beta\sin\phi_1 + r_1\cos\phi_1 \\ y_{\Sigma 2} = (\rho\sin\alpha + X)\sin\phi_1 - \rho\cos\alpha + L\cos\beta\cos\phi_1 + r_1\sin\phi_1 \\ z_{\Sigma 2} = r_1\phi_1\cot\beta + \rho\cos\alpha + L\sin\beta \end{cases}$$

in the equation, $\varphi_1$ is a gear rotation angle, $r_1$ is a radius of a gear pitch circle, $\beta$ is the helix angle of a gear. If the circle center of the tooth profile is located outside the pitch circle, $X$ is positive, and otherwise, $X$ is negative; if the circle center of the tooth profile is located at a different side along the tooth symmetry axis, $L$ is positive, and otherwise, $L$ is negative.

3) The tooth surface equation of the quadratic parabolic profile $m_3$

Assuming that the quadratic parabolic profile $m_3$ is expressed as $\begin{cases} x_{m3} = t' \\ y_{m3} = \dfrac{t'^2}{2A'} \\ z_{m3} = 0 \end{cases}$ in the equation, $t'$ is an independent variable parameter; $A'$ is a parabolic parameter, and $A' = \rho\cos\alpha$.

Likewise, the equation of the tooth surface $\Sigma_3$ which is formed by the quadratic parabolic profile and its helical motion is

$$
\begin{cases}
x_{\Sigma 3} = \left( t'\cos\alpha_n - \dfrac{t'^2}{2A'}\sin\alpha_n + (\dfrac{\rho\sin^2\alpha}{2\cos\alpha} + A')\sin\alpha_n \right)\cos\phi_1 \\[4pt]
\quad - \left( t'\sin\alpha_n + \dfrac{t'^2}{2A'}\cos\alpha_n - (\dfrac{\rho\sin^2\alpha}{2\cos\alpha} + A')\cos\alpha_n \right)\cos\beta\sin\phi_1 + r_1\cos\phi_1 \\[4pt]
y_{\Sigma 3} = \left( t'\cos\alpha_n - \dfrac{t'^2}{2A'}\sin\alpha_n + (\dfrac{\rho\sin^2\alpha}{2\cos\alpha} + A')\sin\alpha_n \right)\sin\phi_1 \\[4pt]
\quad + \left( t'\sin\alpha_n + \dfrac{t'^2}{2A'}\cos\alpha_n - (\dfrac{\rho\sin^2\alpha}{2\cos\alpha} + A')\cos\alpha_n \right)\cos\beta\cos\phi_1 + r_1\sin\phi_1 \\[4pt]
z_{\Sigma 3} = r_1\phi_1\cot\beta - \left( t'\sin\alpha_n + \dfrac{t'^2}{2A'}\cos\alpha_n - (\dfrac{\rho\sin^2\alpha}{2\cos\alpha} + A')\cos\alpha_n \right)\sin\beta
\end{cases}
$$

Finally, it is to be explained that, the above embodiments are only used to explain the technical solutions of the present invention, but not to limit the present invention. Although the present invention is explained in detail with reference to preferred embodiments, those ordinary skilled in the art should understand that, without departing from the scope of the technical solutions of the present invention, modifications or equivalent substitutions may be made to the technical solutions of the present invention, which are to be covered by the scope of the claim of the present invention.

**Claims**

1. A conjugate-curve-based multipoint contact bevel gear meshing pair, comprising:

   a convex tooth gear and a concave tooth gear which are of point contact and have multiple contact points, wherein a meshing surface of the convex tooth gear and the concave tooth gear is a tubular surface,
   **characterized in that**
   the number of the contact points of the convex tooth gear and the concave tooth gear is 3 and the multiple contact points of the convex tooth gear and the concave tooth gear are distributed on different cross sections of tooth profiles,
   wherein: three contact curves formed by the contact points on the tooth surface of the convex tooth gear or the concave tooth gear are a contact curve $l_1$, a contact curve $l_2$ and a contact curve $l_3$ respectively;

   the equation of the contact curve $l_1$ is:
   $$\begin{cases} x_1 = r\cos\theta_1 \\ y_1 = r\sin\theta_1 \\ z_1 = p\theta_1 \end{cases}$$

   wherein r is a radius of the circular helix $l_1$, $\theta_1$ is a curve parameter of the circular helix $l_1$, its value range is $\theta_{1i} \le \theta_1 \le \theta_{1o}$, $p$ is a helix parameter of the circular helix;

   the equation of the contact curve $l_2$ is:
   $$\begin{cases} x_2 = r\cos(\theta_1 - \Delta\theta_1) \\ y_2 = r\sin(\theta_1 - \Delta\theta_1) \\ z_2 = p\theta_1 \end{cases}$$

   wherein $r$ is a radius of the circular helix $l_1$, $\theta_1$ is a curve parameter of the circular helix $l_1$, its value range is $\theta_{1i} \le \theta_1 \le \theta_{1o}$, $p$ is a helix parameter of the circular helix;

   the equation of the contact curve $l_3$ is:
   $$\begin{cases} x_3 = r\cos(\theta_1 - \Delta\theta_2) \\ y_3 = r\sin(\theta_1 - \Delta\theta_2) \\ z_3 = p\theta_1 \end{cases}$$

   wherein $r$ is a radius of the circular helix $l_1$, $\theta_1$ is a curve parameter of the circular helix $l_1$, its value range is $\theta_{1i} \le \theta_1 \le \theta_{1o}$, $p$ is a helix parameter of the circular helix,
   wherein: the tooth profile of the convex tooth gear includes a surface $\Sigma_1$, a surface $\Sigma_2$ and a surface $\Sigma_3$; the

tooth profile of the concave tooth gear includes a surface $\Sigma_1^{'}$, a surface $\Sigma_2^{'}$ and a surface $\Sigma_3^{'}$;

the equation of $\Sigma_1$ is:
$$\begin{cases} x_{\Sigma 1} = r\cos\theta_1 + h_1 n_{x1} + h_1\cos\varphi_1\cos\alpha_1 \\ y_{\Sigma 1} = r\sin\theta_1 + h_1 n_{y1} + h_1\cos\varphi_1\sin\alpha_1 \\ z_{\Sigma 1} = p\theta_1 + h_1 n_{z1} + h_1\sin\varphi_1 \\ \Phi(\theta_1,\varphi_1,\alpha_1) = (r_{\theta_1}, r_{\varphi_1}, r_{\alpha_1}) = 0 \end{cases}$$

$$r_{\theta_1} = \{-r\sin\theta_1 + h_1 n_{x1}(\theta_1), r\cos\theta_1 + h_1 n_{y1}(\theta_1), p + h_1 n_{z1}(\theta_1)\}$$

in the equation, $r_{\varphi} = \{-h_1\sin\varphi_1\cos\alpha_1, -h_1\sin\varphi_1\sin\alpha_1, h_1\cos\varphi_1\}$

$$r_{\alpha} = \{-h_1\cos\varphi_1\sin\alpha_1, h_1\cos\varphi_1\cos\alpha_1, 0\}$$

wherein $h_1$ is a radius of the tooth profile, $n_{x1}$, $n_{y1}$ and $n_{z1}$ denote components of the normal vector of the tooth profile at corresponding contact point position, parameters $\varphi_1$ and $\alpha_1$ denote general sphere $L_1$ parameters respectively;

the equation of $\Sigma_2$ is:
$$\begin{cases} x_{\Sigma 2} = r\cos\theta_2 + h_2 n_{x2} + h_2\cos\varphi_2\cos\alpha_2 \\ y_{\Sigma 2} = r\sin\theta_2 + h_2 n_{y2} + h_2\cos\varphi_2\sin\alpha_2 \\ z_{\Sigma 2} = p(\theta_2 + \Delta\theta_1) + h_2 n_{z2} + h_2\sin\varphi_2 \\ \Phi(\theta_2,\varphi_2,\alpha_2) = (r_{\theta_2}, r_{\varphi_2}, r_{\alpha_2}) = 0 \\ \theta_2 = \theta_1 - \Delta\theta_1 \end{cases}$$

$$r_{\theta_2} = \{-r\sin\theta_2 + h_2 n_{x2}(\theta_2), r\cos\theta_2 + h_2 n_{y2}(\theta_2), p + h_2 n_{z2}(\theta_2)\}$$

in the equation, $r_{\varphi_2} = \{-h_2\sin\varphi_2\cos\alpha_2, -h_2\sin\varphi_2\sin\alpha_2, h_2\cos\varphi_2\}$

$$r_{\alpha_2} = \{-h_2\cos\varphi_2\sin\alpha_2, h_2\cos\varphi_2\cos\alpha_2, 0\}$$

wherein $h_2$ is a radius of the tooth profile, $n_{x2}$, $n_{y2}$ and $n_{z2}$ denote components of the normal vector of the tooth profile at corresponding contact point position, parameters $\varphi_2$ and $\alpha_2$ denote general sphere $L_2$ parameters respectively;

the equation of $\Sigma_3$ is:
$$\begin{cases} x_{\Sigma 3} = r\cos\theta_3 + h_3 n_{x3} + h_3\cos\varphi_3\cos\alpha_3 \\ y_{\Sigma 3} = r\sin\theta_3 + h_3 n_{y3} + h_3\cos\varphi_3\sin\alpha_3 \\ z_{\Sigma 3} = p(\theta_3 + \Delta\theta_2) + h_3 n_{z3} + h_3\sin\varphi_3 \\ \Phi(\theta_3,\varphi_3,\alpha_3) = (r_{\theta_3}, r_{\varphi_3}, r_{\alpha_3}) = 0 \\ \theta_3 = \theta_1 - \Delta\theta_2 \end{cases}$$

$$r_{\theta_3} = \{-r\sin\theta_3 + h_3 n_{x3}(\theta_3), r\cos\theta_3 + h_3 n_{y3}(\theta_3), p + h_3 n_{z3}(\theta_3)\}$$

in the equation, $r_{\varphi_3} = \{-h_3\sin\varphi_3\cos\alpha_3, -h_3\sin\varphi_3\sin\alpha_3, h_3\cos\varphi_3\}$

$$r_{\alpha_3} = \{-h_3\cos\varphi_3\sin\alpha_3, h_3\cos\varphi_3\cos\alpha_3, 0\}$$

wherein $h_3$ is a radius of the tooth profile, $n_{x3}$, $n_{y3}$ and $n_{z3}$ denote components of the normal vector of the tooth profile at corresponding contact point position, parameters $\varphi_3$ and $\alpha_3$ denote general sphere $L_3$ parameters respectively;

the equation of $\Sigma_1^{'}$ is:
$$\begin{cases} x_{\Sigma 1} = r\cos\theta_1 - h_1 n_{x1} + h_1\cos\varphi_1\cos\alpha_1 \\ y_{\Sigma 1} = r\sin\theta_1 - h_1 n_{y1} + h_1\cos\varphi_1\sin\alpha_1 \\ z_{\Sigma 1} = p\theta_1 - h_1 n_{z1} + h_1\sin\varphi_1 \\ \Phi(\theta_1,\varphi_1,\alpha_1) = (r_{\theta_1}, r_{\varphi_1}, r_{\alpha_1}) = 0 \end{cases}$$

$$r_{\theta_1} = \{-r\sin\theta_1 - h_1 n_{x1}(\theta_1), r\cos\theta_1 - h_1 n_{y1}(\theta_1), p - h_1 n_{z1}(\theta_1)\}$$

in the equation, $r_\varphi = \{-h_1 \sin\varphi_1 \cos\alpha_1, -h_1 \sin\varphi_1 \sin\alpha_1, h_1 \cos\varphi_1\}$

$$r_\alpha = \{-h_1 \cos\varphi_1 \sin\alpha_1, h_1 \cos\varphi_1 \cos\alpha_1, 0\}$$

wherein $h_1$ is a radius of the tooth profile, $n_{x1}$, $n_{y1}$ and $n_{z1}$ denote components of the normal vector of the tooth profile at corresponding contact point position, parameters $\varphi_1$ and $\alpha_1$ denote general sphere L$_1$ parameters respectively;

the equation of $\Sigma_2'$ is:
$$\begin{cases} x_{\Sigma2} = r\cos\theta_2 - h_2 n_{x2} + h_2 \cos\varphi_2 \cos\alpha_2 \\ y_{\Sigma2} = r\sin\theta_2 - h_2 n_{y2} + h_2 \cos\varphi_2 \sin\alpha_2 \\ z_{\Sigma2} = p(\theta_2 + \Delta\theta_1) - h_2 n_{z2} + h_2 \sin\varphi_2 \\ \Phi(\theta_2, \varphi_2, \alpha_2) = (r_{\theta_2}, r_{\varphi_2}, r_{\alpha_2}) = 0 \\ \theta_2 = \theta_1 - \Delta\theta_1 \end{cases}$$

$$r_{\theta_2} = \{-r\sin\theta_2 - h_2 n_{x2}(\theta_2), r\cos\theta_2 - h_2 n_{y2}(\theta_2), p - h_2 n_{z2}(\theta_2)\}$$

in the equation, $r_{\varphi_2} = \{-h_2 \sin\varphi_2 \cos\alpha_2, -h_2 \sin\varphi_2 \sin\alpha_2, h_2 \cos\varphi_2\}$

$$r_{\alpha_2} = \{-h_2 \cos\varphi_2 \sin\alpha_2, h_2 \cos\varphi_2 \cos\alpha_2, 0\}$$

wherein $h_2$ is a radius of the tooth profile curved surface, $n_{x2}$, $n_{y2}$ and $n_{z2}$ denote components of the normal vector of the tooth profile at corresponding contact point position, parameters $\varphi_2$ and $\alpha_2$ denote general sphere L$_2$ parameters respectively;

the equation of $\Sigma_3'$ is:
$$\begin{cases} x_{\Sigma3} = r\cos\theta_3 - h_3 n_{x3} + h_3 \cos\varphi_3 \cos\alpha_3 \\ y_{\Sigma3} = r\sin\theta_3 - h_3 n_{y3} + h_3 \cos\varphi_3 \sin\alpha_3 \\ z_{\Sigma3} = p(\theta_3 + \Delta\theta_2) - h_3 n_{z3} + h_3 \sin\varphi_3 \\ \Phi(\theta_3, \varphi_3, \alpha_3) = (r_{\theta_3}, r_{\varphi_3}, r_{\alpha_3}) = 0 \\ \theta_3 = \theta_1 - \Delta\theta_2 \end{cases}$$

$$r_{\theta_3} = \{-r\sin\theta_3 - h_3 n_{x3}(\theta_3), r\cos\theta_3 - h_3 n_{y3}(\theta_3), p - h_3 n_{z3}(\theta_3)\}$$

in the equation, $r_{\varphi_3} = \{-h_3 \sin\varphi_3 \cos\alpha_3, -h_3 \sin\varphi_3 \sin\alpha_3, h_3 \cos\varphi_3\}$

$$r_{\alpha_3} = \{-h_3 \cos\varphi_3 \sin\alpha_3, h_3 \cos\varphi_3 \cos\alpha_3, 0\}$$

wherein $h_3$ is a radius of the tooth profile curved surface, $n_{x3}$, $n_{y3}$ and $n_{z3}$ denote components of the normal vector of the tooth profile at corresponding contact point position, parameters $\varphi_3$ and $\alpha_3$ denote general sphere L$_3$ parameters respectively.

**Patentansprüche**

1. Auf konjugierte Kurven basierendes Kegelradeingriffspaar mit mehreren Kontaktpunkten, aufweisend:

ein konvexes Zahnrad und ein konkaves Zahnrad, die Punktkontakt aufweisen und mehrere Kontaktpunkte besitzen, wobei es sich bei einer Eingriffsfläche des konvexen Zahnrads und des konkaven Zahnrads um eine rohrförmige Fläche handelt,
**dadurch gekennzeichnet, dass**
die Anzahl der Kontaktpunkte des konvexen Zahnrads und des konkaven Zahnrads 3 beträgt und die mehreren Kontaktpunkte des konvexen Zahnrads und des konkaven Zahnrads auf verschiedene Zahnprofilquerschnittsflächen verteilt sind,
wobei: drei Kontaktkurven, die durch die Kontaktpunkte an der Zahnoberfläche des konvexen Zahnrads oder des konkaven Zahnrads gebildet sind, eine Kontaktkurve $l_1$, eine Kontaktkurve $l_2$ bzw. eine Kontaktkurve $l_3$ sind;

wobei die Gleichung der Kontaktkurve $l_1$ lautet:
$$\begin{cases} x_1 = r\cos\theta_1 \\ y_1 = r\sin\theta_1 \\ z_1 = p\theta_1 \end{cases}$$

wobei r ein Radius der kreisförmigen Helix $l_1$ ist, $\theta_1$ ein Kurvenparameter der kreisförmigen Helix $l_1$ *ist,* der Wertebereich derselben $\theta_{1i} \le \theta_1 \le \theta_{1o}$ ist, *p* ein Helixparameter der kreisförmigen Helix ist;

wobei die Gleichung der Kontaktkurve $l_2$ lautet:
$$\begin{cases} x_2 = r\cos(\theta_1 - \Delta\theta_1) \\ y_2 = r\sin(\theta_1 - \Delta\theta_1) \\ z_2 = p\theta_1 \end{cases}$$

wobei r ein Radius der kreisförmigen Helix $l_1$ ist, $\theta_1$ ein Kurvenparameter der kreisförmigen Helix $l_1$ ist, der Wertebereich derselben $\theta_{1i} \le \theta_1 \le \theta_{1o}$ ist, *p* ein Helixparameter der kreisförmigen Helix ist;

wobei die Gleichung der Kontaktkurve $l_3$ lautet:
$$\begin{cases} x_3 = r\cos(\theta_1 - \Delta\theta_2) \\ y_3 = r\sin(\theta_1 - \Delta\theta_2) \\ z_3 = p\theta_1 \end{cases}$$

wobei *r* ein Radius der kreisförmigen Helix $l_1$ ist, $\theta_1$ ein Kurvenparameter der kreisförmigen Helix $l_1$ ist, der Wertebereich derselben $\theta_{1i} \le \theta_1 \le \theta_{1o}$ ist, *p* ein Helixparameter der kreisförmigen Helix ist,
wobei: das Zahnprofil des konvexen Zahnrads eine Oberfläche $\Sigma_1$, eine Oberfläche $\Sigma_2$ und eine Oberfläche $\Sigma_3$

beinhaltet; das Zahnprofil des konkaven Zahnrads eine Oberfläche $\Sigma_1'$, eine Oberfläche $\Sigma_2'$ und eine Ober-

fläche $\Sigma_3'$ beinhaltet;

wobei die Gleichung von $\Sigma_1$ lautet:
$$\begin{cases} x_{\Sigma 1} = r\cos\theta_1 + h_1 n_{x1} + h_1\cos\varphi_1\cos\alpha_1 \\ y_{\Sigma 1} = r\sin\theta_1 + h_1 n_{y1} + h_1\cos\varphi_1\sin\alpha_1 \\ z_{\Sigma 1} = p\theta_1 + h_1 n_{z1} + h_1\sin\varphi_1 \\ \Phi(\theta_1, \varphi_1, \alpha_1) = (r_{\theta_1}, r_{\varphi_1}, r_{\alpha_1}) = 0 \end{cases}$$

wobei in der Gleichung

$$r_{\theta_1} = \{-r\sin\theta_1 + h_1 n_{x1}(\theta_1), r\cos\theta_1 + h_1 n_{y1}(\theta_1), p + h_1 n_{z1}(\theta_1)\}$$

$$r_{\varphi} = \{-h_1\sin\varphi_1\cos\alpha_1, -h_1\sin\varphi_1\sin\alpha_1, h_1\cos\varphi_1\}$$

$$r_{\alpha} = \{-h_1\cos\varphi_1\sin\alpha_1, h_1\cos\varphi_1\cos\alpha_1, 0\}$$

sind,
wobei $h_1$ ein Radius des Zahnprofils ist, $n_{x1}$, $n_{y1}$ und $n_{z1}$ Komponenten des Normalenvektors des Zahnprofils an der entsprechenden Kontaktpunktposition bezeichnen, Parameter $\varphi_1$ und $\alpha_1$ jeweils allgemeine Kugelparameter $L_1$ bezeichnen;

wobei die Gleichung von $\Sigma_2$ lautet:
$$\begin{cases} x_{\Sigma 2} = r\cos\theta_2 + h_2 n_{x2} + h_2\cos\varphi_2\cos\alpha_2 \\ y_{\Sigma 2} = r\sin\theta_2 + h_2 n_{y2} + h_2\cos\varphi_2\sin\alpha_2 \\ z_{\Sigma 2} = p(\theta_2 + \Delta\theta_1) + h_2 n_{z2} + h_2\sin\varphi_2 \\ \Phi(\theta_2, \varphi_2, \alpha_2) = (r_{\theta_2}, r_{\varphi_2}, r_{\alpha_2}) = 0 \\ \theta_2 = \theta_1 - \Delta\theta_1 \end{cases}$$

wobei in der Gleichung

$$r_{\theta_2} = \{-r\sin\theta_2 + h_2 n_{x2}(\theta_2), r\cos\theta_2 + h_2 n_{y2}(\theta_2), p + h_2 n_{z2}(\theta_2)\}$$

$$r_{\varphi_2} = \{-h_2 \sin\varphi_2 \cos\alpha_2, -h_2 \sin\varphi_2 \sin\alpha_2, h_2 \cos\varphi_2\}$$

$$r_{\alpha_2} = \{-h_2 \cos\varphi_2 \sin\alpha_2, h_2 \cos\varphi_2 \cos\alpha_2, 0\}$$

sind,

wobei $h_2$ ein Radius des Zahnprofils ist, $n_{x2}$, $n_{y2}$ und $n_{z2}$ Komponenten des Normalenvektors des Zahnprofils an der entsprechenden Kontaktpunktposition bezeichnen, Parameter $\varphi_2$ und $\alpha_2$ jeweils allgemeine Kugelparameter $L_2$ bezeichnen;

wobei die Gleichung von $\Sigma_3$ lautet:
$$\begin{cases} x_{\Sigma 3} = r\cos\theta_3 + h_3 n_{x3} + h_3 \cos\varphi_3 \cos\alpha_3 \\ y_{\Sigma 3} = r\sin\theta_3 + h_3 n_{y3} + h_3 \cos\varphi_3 \sin\alpha_3 \\ z_{\Sigma 3} = p(\theta_3 + \Delta\theta_2) + h_3 n_{z3} + h_3 \sin\varphi_3 \\ \Phi(\theta_3, \varphi_3, \alpha_3) = (r_{\theta_3}, r_{\varphi_3}, r_{\alpha_3}) = 0 \\ \theta_3 = \theta_1 - \Delta\theta_2 \end{cases}$$

wobei in der Gleichung

$$r_{\theta_3} = \{-r\sin\theta_3 + h_3 n_{x3}(\theta_3), r\cos\theta_3 + h_3 n_{y3}(\theta_3), p + h_3 n_{z3}(\theta_3)\}$$

$$r_{\varphi_3} = \{-h_3 \sin\varphi_3 \cos\alpha_3, -h_3 \sin\varphi_3 \sin\alpha_3, h_3 \cos\varphi_3\}$$

$$r_{\alpha_3} = \{-h_3 \cos\varphi_3 \sin\alpha_3, h_3 \cos\varphi_3 \cos\alpha_3, 0\}$$

sind,

wobei $h_3$ ein Radius des Zahnprofils ist, $n_{x3}$, $n_{y3}$ und $n_{z3}$ Komponenten des Normalenvektors des Zahnprofils an der entsprechenden Kontaktpunktposition bezeichnen, Parameter $\varphi_3$ und $\alpha_3$ jeweils allgemeine Kugelparameter $L_3$ bezeichnen;

wobei die Gleichung von $\Sigma_1'$ lautet:
$$\begin{cases} x_{\Sigma 1} = r\cos\theta_1 - h_1 n_{x1} + h_1 \cos\varphi_1 \cos\alpha_1 \\ y_{\Sigma 1} = r\sin\theta_1 - h_1 n_{y1} + h_1 \cos\varphi_1 \sin\alpha_1 \\ z_{\Sigma 1} = p\theta_1 - h_1 n_{z1} + h_1 \sin\varphi_1 \\ \Phi(\theta_1, \varphi_1, \alpha_1) = (r_{\theta_1}, r_{\varphi_1}, r_{\alpha_1}) = 0 \end{cases}$$

wobei in der Gleichung

$$r_{\theta_1} = \{-r\sin\theta_1 - h_1 n_{x1}(\theta_1), r\cos\theta_1 - h_1 n_{y1}(\theta_1), p - h_1 n_{z1}(\theta_1)\}$$

$$r_{\varphi} = \{-h_1 \sin\varphi_1 \cos\alpha_1, -h_1 \sin\varphi_1 \sin\alpha_1, h_1 \cos\varphi_1\}$$

$$r_{\alpha} = \{-h_1 \cos\varphi_1 \sin\alpha_1, h_1 \cos\varphi_1 \cos\alpha_1, 0\}$$

sind,

wobei $h_1$ ein Radius des Zahnprofils ist, $n_{x1}$, $n_{y1}$ und $n_{z1}$ Komponenten des Normalenvektors des Zahnprofils an der entsprechenden Kontaktpunktposition bezeichnen, Parameter $\varphi_1$ und $\alpha_1$ jeweils allgemeine Kugelparameter $L_1$ bezeichnen;

wobei die Gleichung von $\Sigma_2'$ lautet:
$$\begin{cases} x_{\Sigma 2} = r\cos\theta_2 - h_2 n_{x2} + h_2 \cos\varphi_2 \cos\alpha_2 \\ y_{\Sigma 2} = r\sin\theta_2 - h_2 n_{y2} + h_2 \cos\varphi_2 \sin\alpha_2 \\ z_{\Sigma 2} = p(\theta_2 + \Delta\theta_1) - h_2 n_{z2} + h_2 \sin\varphi_2 \\ \Phi(\theta_2, \varphi_2, \alpha_2) = (r_{\theta_2}, r_{\varphi_2}, r_{\alpha_2}) = 0 \\ \theta_2 = \theta_1 - \Delta\theta_1 \end{cases}$$

wobei in der Gleichung

$$r_{\theta_2} = \{-r\sin\theta_2 - h_2 n_{x2}(\theta_2), r\cos\theta_2 - h_2 n_{y2}(\theta_2), p - h_2 n_{z2}(\theta_2)\}$$

$$r_{\varphi_2} = \{-h_2 \sin\varphi_2 \cos\alpha_2, -h_2 \sin\varphi_2 \sin\alpha_2, h_2 \cos\varphi_2\}$$

$$r_{\alpha_2} = \{-h_2 \cos\varphi_2 \sin\alpha_2, h_2 \cos\varphi_2 \cos\alpha_2, 0\}$$

sind,
wobei $h_2$ ein Radius der Zahnprofil-Krümmungsfläche ist, $n_{x2}$, $n_{y2}$ und $n_{z2}$ Komponenten des Normalenvektors des Zahnprofils an der entsprechenden Kontaktpunktposition bezeichnen, Parameter $\varphi_2$ und $\alpha_2$ jeweils allgemeine Kugelparameter $L_2$ bezeichnen;

wobei die Gleichung von $\Sigma_3^{'}$ lautet:
$$\begin{cases} x_{\Sigma 3} = r\cos\theta_3 - h_3 n_{x3} + h_3 \cos\varphi_3 \cos\alpha_3 \\ y_{\Sigma 3} = r\sin\theta_3 - h_3 n_{y3} + h_3 \cos\varphi_3 \sin\alpha_3 \\ z_{\Sigma 3} = p(\theta_3 + \Delta\theta_2) - h_3 n_{z3} + h_3 \sin\varphi_3 \\ \Phi(\theta_3, \varphi_3, \alpha_3) = (r_{\theta_3}, r_{\varphi_3}, r_{\alpha_3}) = 0 \\ \theta_3 = \theta_1 - \Delta\theta_2 \end{cases}$$

wobei in der Gleichung

$$r_{\theta_3} = \{-r\sin\theta_3 - h_3 n_{x3}(\theta_3), r\cos\theta_3 - h_3 n_{y3}(\theta_3), p - h_3 n_{z3}(\theta_3)\}$$

$$r_{\varphi_3} = \{-h_3 \sin\varphi_3 \cos\alpha_3, -h_3 \sin\varphi_3 \sin\alpha_3, h_3 \cos\varphi_3\}$$

$$r_{\alpha_3} = \{-h_3 \cos\varphi_3 \sin\alpha_3, h_3 \cos\varphi_3 \cos\alpha_3, 0\}$$

sind,
wobei $h_3$ ein Radius der Zahnprofil-Krümmungsfläche ist, $n_{x3}$, $n_{y3}$ und $n_{z3}$ Komponenten des Normalenvektors des Zahnprofils an der entsprechenden Kontaktpunktposition bezeichnen, Parameter $\varphi_3$ und $\alpha_3$ jeweils allgemeine Kugelparameter $L_3$ bezeichnen.

## Revendications

1.  Paire d'engrenages coniques du type à contact multipoint basée sur une courbe conjuguée, qui comprend :

    une roue dentée convexe et une roue dentée concave qui sont du type à contact ponctuel et qui possèdent plusieurs points de contact; dans laquelle une surface d'engrènement de la roue dentée convexe et de la roue dentée concave représente une surface tubulaire ;
    **caractérisée en ce que**
    le nombre des points de contact de la roue dentée convexe et de la roue dentée concave s'élève à 3 et les points de contacts multiples de la roue dentée convexe et de la roue dentée concave sont distribués sur différentes sections transversales de profils de dentures ;
    dans laquelle : trois courbes de contact formées par les points de contact sur la surface de denture de la roue dentée convexe ou de la roue dentée concave représentent une courbe de contact $l_1$, une courbe de contact $l_2$ et une courbe de contact $l_3$, respectivement ;
    l'équation de la courbe de contact $l_1$ est : $\begin{cases} x_1 = r\cos\theta_1 \\ y_1 = r\sin\theta_1 \\ z_1 = p\theta_1 \end{cases}$
    dans laquelle $r$ représente le rayon de l'hélice circulaire $l_1$, $\theta_1$ représente un paramètre de courbe de l'hélice circulaire $l_1$, sa plage de valeurs est égale $\theta_{1i} \le \theta_1 \le \theta_{10}$, $p$ représente un paramètre d'hélice de l'hélice circulaire ;

l'équation de la courbe de contact $l_2$ est : $\begin{cases} x_2 = r\cos(\theta_1 - \Delta\theta_1) \\ y_2 = r\sin(\theta_1 - \Delta\theta_1) \\ z_2 = p\theta_1 \end{cases}$

dans laquelle $r$ représente le rayon de l'hélice circulaire $l_1$, $\theta_1$ représente un paramètre de courbe de l'hélice circulaire $l_1$, sa plage de valeurs est égale $\theta_{1i} \le \theta_1 \le \theta_{10}$, $p$ représente un paramètre d'hélice de l'hélice circulaire ;

l'équation de la courbe de contact $l_3$ est : $\begin{cases} x_3 = r\cos(\theta_1 - \Delta\theta_2) \\ y_3 = r\sin(\theta_1 - \Delta\theta_2) \\ z_3 = p\theta_1 \end{cases}$

dans laquelle $r$ représente le rayon de l'hélice circulaire $l_1$, $\theta_1$ représente un paramètre de courbe de l'hélice circulaire $l_1$, sa plage de valeurs est égale $\theta_{1i} \le \theta_1 \le \theta_{10}$, $p$ représente un paramètre d'hélice de l'hélice circulaire ;
dans laquelle le profil de denture de la roue dentée convexe englobe une surface $\Sigma_1$, une surface $\Sigma_2$, et une surface $\Sigma_1$ ; le profil de denture de la roue dentée concave englobe une surface $\Sigma'_1$, une surface $\Sigma'_2$, et une surface $\Sigma'_3$;

l'équation de $\Sigma_1$ est : $\begin{cases} x_{\Sigma1} = r\cos\theta_1 + h_1 n_{x1} + h_1 \cos\varphi_1 \cos\alpha_1 \\ y_{\Sigma1} = r\sin\theta_1 + h_1 n_{y1} + h_1 \cos\varphi_1 \sin\alpha_1 \\ z_{\Sigma1} = p\theta_1 + h_1 n_{z1} + h_1 \sin\varphi_1 \\ \Phi(\theta_1,\varphi_1,\alpha_1) = (r_{\theta_1}, r_{\varphi_1}, r_{\alpha_1}) = 0 \end{cases}$

$$r_{\theta_1} = \{-r\sin\theta_1 + h_1 n_{x1}(\theta_1), r\cos\theta_1 + h_1 n_{y1}(\theta_1), p + h_1 n_{z1}(\theta_1$$

dans l'équation, $\quad r_{\varphi} = \{-h_1\sin\varphi_1\cos\alpha_1, -h_1\sin\varphi_1\sin\alpha_1, h_1\cos\varphi_1\}$

$$r_{\alpha} = \{-h_1\cos\varphi_1\sin\alpha_1, h_1\cos\varphi_1\cos\alpha_1, 0\}$$

dans laquelle $h_1$ représente un rayon du profil de denture, $n_{x1}$, $n_{y1}$ et $n_{z1}$ désignent des composants du vecteur normal du profil de denture des positions correspondantes de point de contact, les paramètres $\varphi_1$ et $\alpha_1$ désignent des paramètres généraux de la sphère $L_1$, respectivement ;

l'équation de $\Sigma_z$ est : $\begin{cases} x_{\Sigma2} = r\cos\theta_2 + h_2 n_{x2} + h_2 \cos\varphi_2 \cos\alpha_2 \\ y_{\Sigma2} = r\sin\theta_2 + h_2 n_{y2} + h_2 \cos\varphi_2 \sin\alpha_2 \\ z_{\Sigma2} = p(\theta_2 + \Delta\theta_1) + h_2 n_{z2} + h_2 \sin\varphi_2 \\ \Phi(\theta_2,\varphi_2,\alpha_2) = (r_{\theta_2}, r_{\varphi_2}, r_{\alpha_2}) = 0 \\ \theta_2 = \theta_1 - \Delta\theta_1 \end{cases}$

$$r_{\theta_2} = \{-r\sin\theta_2 + h_2 n_{x2}(\theta_2), r\cos\theta_2 + h_2 n_{y2}(\theta_2), p + h_2 n_{z2}(\theta_2)\}$$

dans l'équation, $\quad r_{\varphi_2} = \{-h_2\sin\varphi_2\cos\alpha_2, -h_2\sin\varphi_2\sin\alpha_2, h_2\cos\varphi_2\}$

$$r_{\alpha_2} = \{-h_2\cos\varphi_2\sin\alpha_2, h_2\cos\varphi_2\cos\alpha_2, 0\}$$

dans laquelle $h_2$ représente un rayon du profil de denture, $n_{x2}$, $n_{y2}$ et $n_{z2}$ désignent des composants du vecteur normal du profil de denture des positions correspondantes de point de contact, les paramètres $\varphi_2$ et $\alpha_2$ désignent des paramètres généraux de la sphère $L_2$, respectivement ;

l'équation de $\Sigma_3$ est:
$$\begin{cases} x_{\Sigma3} = r\cos\theta_3 + h_3 n_{x3} + h_3 \cos\varphi_3 \cos\alpha_3 \\ y_{\Sigma3} = r\sin\theta_3 + h_3 n_{y3} + h_3 \cos\varphi_3 \sin\alpha_3 \\ z_{\Sigma3} = p(\theta_3 + \Delta\theta_2) + h_3 n_{z3} + h_3 \sin\varphi_3 \\ \Phi(\theta_3, \varphi_3, \alpha_3) = (r_{\theta_3}, r_{\varphi_3}, r_{\alpha_3}) = 0 \\ \theta_3 = \theta_1 - \Delta\theta_2 \end{cases}$$

$$r_{\theta_3} = \{-r\sin\theta_3 + h_3 n_{x3}(\theta_3), r\cos\theta_3 + h_3 n_{y3}(\theta_3), p + h_3 n_{z3}(\theta_3)\}$$

dans l'équation, $r_{\varphi_3} = \{-h_3 \sin\varphi_3 \cos\alpha_3, -h_3 \sin\varphi_3 \sin\alpha_3, h_3 \cos\varphi_3\}$

$$r_{\alpha_3} = \{-h_3 \cos\varphi_3 \sin\alpha_3, h_3 \cos\varphi_3 \cos\alpha_3, 0\}$$

dans laquelle $h_3$ représente un rayon du profil de denture, $n_{x3}$, $n_{y3}$ et $n_{z3}$ désignent des composants du vecteur normal du profil de denture des positions correspondantes de point de contact, les paramètres $\varphi_3$ et $\alpha_3$ désignent des paramètres généraux de la sphère $L_3$, respectivement ;

l'équation de $\Sigma_1'$ est :
$$\begin{cases} x_{\Sigma1} = r\cos\theta_1 - h_1 n_{x1} + h_1 \cos\varphi_1 \cos\alpha_1 \\ y_{\Sigma1} = r\sin\theta_1 - h_1 n_{y1} + h_1 \cos\varphi_1 \sin\alpha_1 \\ z_{\Sigma1} = p\theta_1 - h_1 n_{z1} + h_1 \sin\varphi_1 \\ \Phi(\theta_1, \varphi_1, \alpha_1) = (r_{\theta_1}, r_{\varphi_1}, r_{\alpha_1}) = 0 \end{cases}$$

$$r_{\theta_1} = \{-r\sin\theta_1 - h_1 n_{x1}(\theta_1), r\cos\theta_1 - h_1 n_{y1}(\theta_1), p - h_1 n_{z1}(\theta_1)\}$$

dans l'équation, $r_{\varphi} = \{-h_1 \sin\varphi_1 \cos\alpha_1, -h_1 \sin\varphi_1 \sin\alpha_1, h_1 \cos\varphi_1\}$

$$r_{\alpha} = \{-h_1 \cos\varphi_1 \sin\alpha_1, h_1 \cos\varphi_1 \cos\alpha_1, 0\}$$

dans laquelle $h_1$ représente un rayon du profil de denture, $n_{x1}$, $n_{y1}$ et $n_{z1}$ désignent des composants du vecteur normal du profil de denture des positions correspondantes de point de contact, les paramètres $\varphi_1$ et $\alpha_1$ désignent des paramètres généraux de la sphère $L_1$, respectivement ;

l'équation de $\Sigma_2'$ est :
$$\begin{cases} x_{\Sigma2} = r\cos\theta_2 - h_2 n_{x2} + h_2 \cos\varphi_2 \cos\alpha_2 \\ y_{\Sigma2} = r\sin\theta_2 - h_2 n_{y2} + h_2 \cos\varphi_2 \sin\alpha_2 \\ z_{\Sigma2} = p(\theta_2 + \Delta\theta_1) - h_2 n_{z2} + h_2 \sin\varphi_2 \\ \Phi(\theta_2, \varphi_2, \alpha_2) = (r_{\theta_2}, r_{\varphi_2}, r_{\alpha_2}) = 0 \\ \theta_2 = \theta_1 - \Delta\theta_1 \end{cases}$$

$$r_{\theta_2} = \{-r\sin\theta_2 - h_2 n_{x2}(\theta_2), r\cos\theta_2 - h_2 n_{y2}(\theta_2), p - h_2 n_{z2}(\theta_2)\}$$

dans l'équation, $r_{\varphi_2} = \{-h_2 \sin\varphi_2 \cos\alpha_2, -h_2 \sin\varphi_2 \sin\alpha_2, h_2 \cos\varphi_2\}$

$$r_{\alpha_2} = \{-h_2 \cos\varphi_2 \sin\alpha_2, h_2 \cos\varphi_2 \cos\alpha_2, 0\}$$

dans laquelle $h_2$ représente un rayon du profil de denture, $n_{x2}$, $n_{y2}$ et $n_{z2}$ désignent des composants du vecteur normal du profil de denture des positions correspondantes de point de contact, les paramètres $\varphi_2$ et $\alpha_2$ désignent des paramètres généraux de la sphère $L_2$, respectivement ;

l'équation de $\Sigma_3$ est :
$$\begin{cases} x_{\Sigma 3} = r\cos\theta_3 - h_3 n_{x3} + h_3 \cos\varphi_3 \cos\alpha_3 \\ y_{\Sigma 3} = r\sin\theta_3 - h_3 n_{y3} + h_3 \cos\varphi_3 \sin\alpha_3 \\ z_{\Sigma 3} = p(\theta_3 + \Delta\theta_2) - h_3 n_{z3} + h_3 \sin\varphi_3 \\ \Phi(\theta_3,\varphi_3,\alpha_3) = (r_{\theta_3}, r_{\varphi_3}, r_{\alpha_3}) = 0 \\ \theta_3 = \theta_1 - \Delta\theta_2 \end{cases}$$

dans l'équation,
$$r_{\theta_3} = \{-r\sin\theta_3 - h_3 n_{x3}(\theta_3), r\cos\theta_3 - h_3 n_{y3}(\theta_3), p - h_3 n_{z3}(\theta_3)\}$$
$$r_{\varphi_3} = \{-h_3 \sin\varphi_3 \cos\alpha_3, -h_3 \sin\varphi_3 \sin\alpha_3, h_3 \cos\varphi_3\}$$
$$r_{\alpha_3} = \{-h_3 \cos\varphi_3 \sin\alpha_3, h_3 \cos\varphi_3 \cos\alpha_3, 0\}$$

dans laquelle $h_3$ représente un rayon du profil de denture, $n_{x3}$, $n_{y3}$ et $n_{z3}$ désignent des composants du vecteur normal du profil de denture des positions correspondantes de point de contact, les paramètres $\varphi_3$ et $\alpha_3$ désignent des paramètres généraux de la sphère $L_3$, respectivement.

Figure 1

Figure 2

Figure 3

Figure 4

Figure 5

Figure 6

Figure 7

Figure 8

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102853054 A
- CN 103075493 A
- CN 103939575 A